# FASCICULE DE BREVET EUROPEEN

(11) **EP 2 148 413 B1**
(45) Date de publication et mention de la délivrance du brevet: **26.09.2012**
(21) Numéro de dépôt: 09165206.5
(22) Date de dépôt: 10.07.2009
(51) Int. Cl.: H02K 7/06, F16H 25/22, F16D 65/14, F16H 25/24

(54) **Actionneur électrique linéaire intégré**
Integriertes lineares elektrisches Stellglied
Integrated linear electrical actuator

(30) Priorité: 22.07.2008 FR 0854989
(43) Date de publication de la demande: 27.01.2010
(73) Titulaire: Artus, 49240 Avrille (FR)
(72) Inventeur: Quesne, Patrick, 49000 Ecouflant (FR)
(74) Mandataire: David, Alain

(56) Documents cités:
- DE-A1- 19 628 804
- DE-A1- 19 859 325
- DE-A1- 19 944 876
- US-A- 3 202 886
- US-B1- 6 315 092

## Description

La présente invention se rapporte au domaine des machines électriques et elle concerne plus particulièrement un actionneur électrique qui transforme le mouvement de rotation d'un moteur électrique en un mouvement de translation d'un axe linéaire au moyen d'un mécanisme à vis et rouleaux satellites.

On trouve de tels actionneurs électriques - comme définis dans le préambule de la revendication 1 - dans de nombreuses applications industrielles qui nécessitent un déplacement axial dans deux sens opposés, déplacement obtenu simplement par le mécanisme à vis et rouleaux satellites qui est naturellement réversible, comme par exemple dans la demande DE 198 59 325.

Toutefois, cette totale réversibilité du système peut être un inconvénient et il peut y avoir un intérêt à rendre irréversible ce mécanisme à vis et rouleaux satellites, naturellement réversible. On peut envisager l'utilisation d'un système classique vis/écrou qui est irréversible mais alors au prix d'un rendement médiocre.

La présente invention a donc pour objet de proposer un actionneur électrique perfectionné qui permette cette irréversibilité mais sans altérer le rendement de conversion en fonctionnement normal. Ce but est atteint avec un actionneur électrique comportant un moteur électrique ayant un stator annulaire et un rotor tubulaire portant plusieurs segments d'aimant permanent et constituant un écrou de vis d'un mécanisme à vis et rouleaux satellites destiné à transformer le mouvement de rotation du moteur électrique en un mouvement de translation axiale d'une tige linéaire filetée disposée coaxialement audit rotor tubulaire et constituant ladite vis dudit mécanisme à vis et rouleaux satellites, lesdits rouleaux satellites étant montés avec leurs axes parallèles sur un porte rouleaux satellites, **caractérisé en ce que** ledit porte rouleaux satellites comporte une dentelure destiné à coopérer avec une dentelure correspondante d'un mécanisme de sélection actionné par un moteur électrique linéaire à deux positions pour, en bloquant sélectivement le mouvement de rotation synchrone desdits rouleaux satellites par rapport audit rotor tubulaire, interdire tout mouvement de translation axiale de ladite tige linéaire filetée sous l'action d'une force extérieure de traction ou de compression.

Ainsi, avec l'actionneur de l'invention, on peut assurer une irréversibilité d'un mécanisme a priori simplement réversible et donc permettre d'immobiliser la vis du mécanisme à vis et rouleaux satellites dans n'importe qu'elle position et maintenir cette position même en absence d'alimentation électrique.

De préférence, ledit moteur électrique linéaire à deux positions comporte, logé dans un boîtier, un stator formé d'un premier et d'un second bobinages annulaires séparés axialement d'une distance déterminée et un rotor formé par un arbre concentrique portant un premier et un second segments annulaires adjacents d'aimant permanent d'une largeur sensiblement égale à celle du bobinage annulaire auquel ils sont chacun associés, une première position dudit moteur électrique linéaire étant définie lorsque ledit premier segment d'aimant permanent fait face audit premier bobinage annulaire et une seconde position dudit moteur électrique linéaire étant définie lorsque ledit second segment d'aimant permanent fait face audit second bobinage annulaire.

Avantageusement, le guidage axial et radial dudit arbre rotor est réalisé par un palier en carbone monté entre ledit arbre rotor et lesdits bobinages annulaires.

Selon le mode de réalisation envisagé, le passage de ladite première à ladite seconde position et inversement est effectué par une commande électrique dudit moteur électrique linéaire à deux positions ou par un déplacement axial manuel dudit arbre rotor au moyen d'un outillage approprié. La position dudit moteur électrique linéaire est détectée automatiquement par la mesure de l'inductance de l'un desdits premier et second bobinages annulaires.

Avantageusement, ledit moteur électrique linéaire à deux positions est monté dans le prolongement de ladite tige linéaire filetée, l'extrémité dudit arbre rotor faisant face à ladite tige linéaire filetée étant formée par une paroi en cloche comportant des cannelures externes destinées à coopérer avec des cannelures correspondantes dudit rotor tubulaire et à l'intérieur de laquelle est monté ledit mécanisme de sélection.

De préférence, l'extrémité dudit arbre rotor opposée à ladite tige linéaire filetée comporte un plot dont la position « enfoncée » ou non permet d'assurer un contrôle visuel simple de la position axiale dudit arbre rotor.

Avantageusement, ledit mécanisme de sélection comporte une pièce en cloche reposant sur une garniture de friction déposée au fond de ladite paroi en cloche et maintenue en position contre des rondelles élastiques par un écrou de réglage d'effort.

La présente invention sera mieux comprise en regard des dessins annexés, donnés à titre illustratif et non limitatif, sur lesquels :
- la figure 1 montre un schéma de principe dans une première position dite « réversible » d'un actionneur électrique selon l'invention dans une vue en coupe axiale, et
- la figure 2 montre un schéma de principe dans une seconde position dite « irréversible » d'un actionneur électrique selon l'invention dans une vue en coupe axiale.

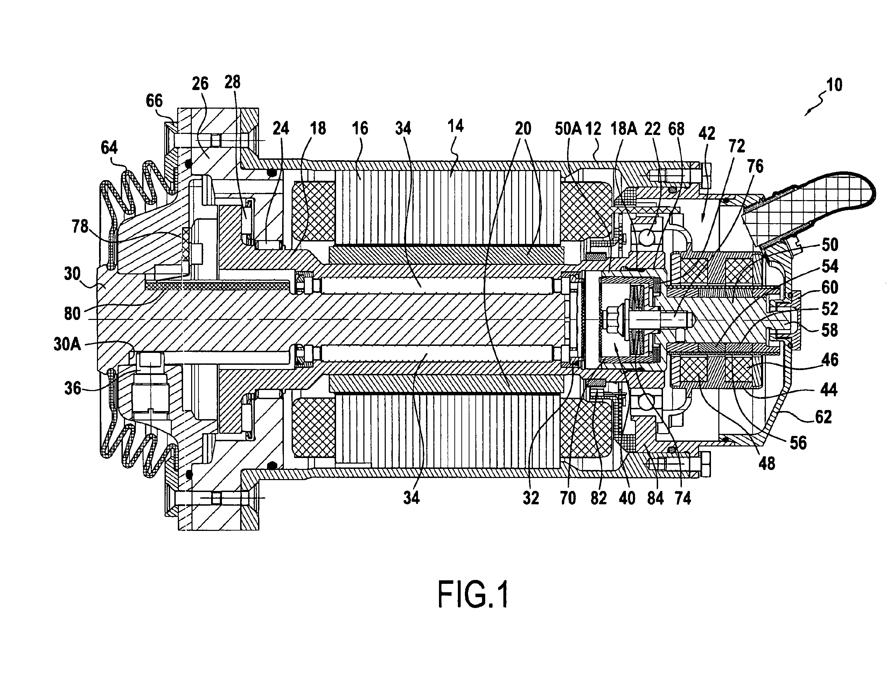

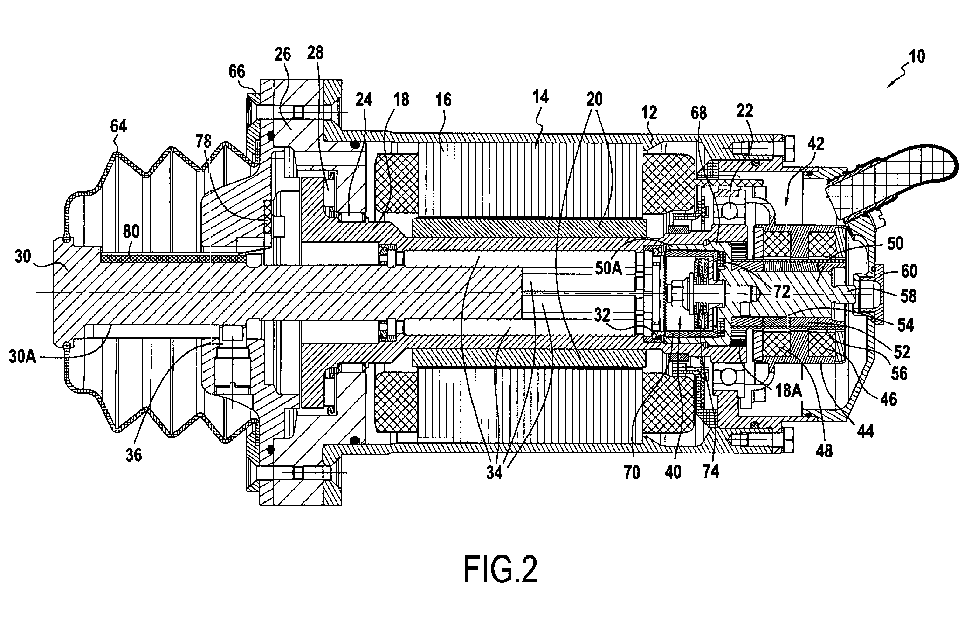

Les figures 1 et 2 illustrent en coupe axiale, respectivement en position « rentrée » et en position « sortie », un actionneur électrique selon l'invention. Cet actionneur 10, monté dans un boîtier ou carter de protection de forme cylindrique 12, comporte un moteur électrique 14 qui, dans l'exemple illustré, est réalisé sous la forme d'un moteur à arbre creux excité par aimant permanent et pouvant commuter de manière électronique, dont le stator annulaire 16 est monté fixement dans le carter et dont le rotor 18 séparé du stator par un entrefer annulaire est formé par un élément tubulaire qui porte plusieurs segments d'aimant permanent 20.

Ce rotor tubulaire est supporté en rotation dans le carter au moyen d'un palier à billes 22 et d'un premier palier à rouleaux 24 placés chacun à une de ses deux extrémités et il prend appui axialement dans le carter via une pièce d'appui 26 par un second palier à rouleaux 28. Il est pourvu d'un taraudage interne de façon à constituer un écrou de vis d'un mécanisme de type planétaire, à vis et rouleaux satellites, destiné à transformer le mouvement de rotation du moteur électrique en un mouvement de translation d'une tige linéaire filetée 30 disposée coaxialement dans la partie creuse du rotor tubulaire et formant la vis du mécanisme planétaire. Entre cet écrou de vis et la tige linéaire filetée, monté sur un porte rouleaux satellites 32, sont disposés avec leurs axes parallèles des rouleaux satellites 34 qui, pendant un mouvement de rotation du rotor/écrou de vis, en roulant dans le taraudage du rotor et sur le filetage de la tige linéaire filetée, tournent en synchronisme de manière planétaire autour de cette tige linéaire filetée et lui communiquent le mouvement de translation axiale. Classiquement, un système d'anti-rotation constitué d'un ergot 36 s'engageant dans une rainure 30B de la tige linéaire filetée empêche sa rotation lorsque le rotor est entraîné en rotation.

Le système ainsi créé est réversible avec deux sens de déplacement de la tige linéaire filetée en fonction des deux sens de rotation du moteur électrique. Ces deux sens de déplacement peuvent bien entendu aussi être obtenus par une force extérieure de traction ou compression exercée sur la tige linéaire filetée.

Selon l'invention, il est proposé de rendre ce système irréversible c'est-à-dire, de préférence par le biais d'une commande électrique, de bloquer le déplacement axial de la tige linéaire filetée dans n'importe laquelle des positions prises par l'actionneur lorsqu'elle est soumise à une force extérieure de traction ou de compression. Pour ce faire, le mouvement synchrone satellite des rouleaux satellites par rapport à l'écrou de vis (ou par rapport à la vis dans une configuration alternative non représentée) est bloqué par un mécanisme de sélection 40 actionné par un moteur électrique linéaire 42 qui vient bloquer le mouvement de rotation du porte rouleaux satellites 32 par rapport à l'écrou de vis/rotor 18.

Le moteur électrique linéaire est un moteur sans balais (brushless) à deux états stables disposé dans le prolongement de la tige linéaire filetée et dans le boîtier 44 duquel est logé deux bobinages stator annulaires 46, 48 séparés axialement d'une distance déterminée correspondant au pas du moteur linéaire, le noyau central formant rotor 50 de ce moteur linéaire étant constitué par un arbre concentrique portant deux segments annulaires adjacents d'aimant permanent 52, 54 d'une largeur sensiblement égale à celle du bobinage stator auquel ils sont associés. Le guidage axial et radial de l'arbre rotor peut être réalisé par un palier en carbone 56 monté entre cet arbre rotor et les bobinages stator. Le boîtier est maintenu fixement en position dans le carter par des moyens de fixation appropriés et l'arbre rotor, coaxial à la tige linéaire filetée, comporte à une première extrémité un plot 58 actionnable au moyen d'un outil adapté une fois un bouchon d'accès 60 retiré du capot 62 fermant une des deux extrémités de l'actionneur, l'autre extrémité étant fermée par un soufflet 64 s'étendant depuis l'extrémité libre de la tige linéaire filetée 30 vers la pièce d'appui 26 sur laquelle il est maintenu par une bride 66. L'actionneur est ainsi parfaitement fermé et étanche à l'environnement externe et la lubrification interne du système vis/écrou et des différents paliers peut être alors réalisé classiquement.

Quant à elle, la seconde extrémité de l'arbre rotor se termine à une première extrémité par une paroi en cloche 50A dirigée vers la tige filetée présentant des cannelures externes 68 pour coopérer avec les cannelures correspondantes 18A de la face interne du rotor et à l'intérieur de laquelle est monté le mécanisme de sélection 40.

Le mécanisme de sélection entre la position réversible et la position irréversible est formé par une pièce en cloche 70 (épousant la forme interne de la paroi en cloche) reposant sur une garniture de friction 72 déposée au fond de la paroi en cloche de l'arbre rotor du moteur linéaire et maintenue en position contre des rondelles élastiques 74 par un écrou de réglage d'effort 76. La périphérie de la pièce en cloche comporte une dentelure pour coopérer avec une dentelure correspondante du porte rouleaux satellites de façon à permettre un blocage de ce dernier à la manière d'un crabot dans une position déterminée par la position respective des dentelures. A cet effet, l'entrée des dents de cette dentelure est profilée pour faciliter la mise en prise qui de toute façon s'effectue statiquement ou à très faible vitesse.

La position linéaire absolue de la tige de l'actionneur est mesurée dans l'exemple illustré par un potentiomètre linéaire dont la piste 78 est portée par la tige filetée linéaire et le curseur 80 par une partie fixe comme la pièce d'appui ou toute autre pièce qui lui est solidaire. Toutefois, tout autre moyen de mesure alternatif (LDVT par exemple) est aussi envisageable. La commande du moteur et son asservissement en vitesse, position et courant est assurée par des capteurs angulaires 82, par exemple de type électronique (Hall normaux ou linéaires) implantés sur un flasque arrière 84 du moteur, sachant que la position absolue est délivrée par le potentiomètre linéaire. Ces capteurs moteurs peuvent aussi être avantageusement remplacés par un résolveur. Une mesure de l'effort exercée sur la tige linéaire filetée est aussi possible par une mesure de la déformation de la pièce d'appui par un capteur de déformation approprié, par exemple de type « rosette » ou piézoélectrique. La position du moteur linéaire est détectée automatiquement par la mesure de l'inductance d'un des deux bobinages stator 46 ou 48.

Le fonctionnement de l'actionneur selon l'invention est le suivant. En fonctionnement normal (figure 1), et comme il est connu, l'actionneur est alimenté et contrôlé en vitesse, position et courant par son électronique de commande en fonction des données issues des capteurs moteurs. Dans ce mode de fonctionnement, le déplacement du piston est réversible et peut être effectué dans l'un ou l'autre de ses deux sens de déplacement tant par la commande du moteur électrique 14 que par l'action d'une force extérieure sur la tige linéaire filetée. Le mécanisme de sélection 40 n'est donc pas actionné et le moteur linéaire 42 est dans une première position dans laquelle le premier segment d'aimant permanent 54 de l'arbre rotor fait face au premier bobinage 46 du stator assurant un désaccouplement des dentelures respectives de la paroi en cloche 50A de cet arbre rotor et du porte rouleaux satellites 32.

Lorsqu'il est souhaité rendre le système d'actionnement irréversible (figure 2), une commande électrique du moteur linéaire a pour effet, en actionnant le second bobinage stator 48, de provoquer le déplacement du second segment d'aimant permanent 56 qui va venir se positionner au droit de ce bobinage et donc en provoquant le déplacement linéaire correspondant de l'arbre rotor 50 va enclencher le mécanisme de sélection 40 par l'accouplement des dentelures respectives de la paroi en cloche 50A de cet arbre rotor et du porte satellites 32. Dans cette position, les rouleaux satellites sont bloqués et la tige linéaire filetée ne peut plus bouger sous l'action d'une force extérieure de traction ou de compression exercée sur elle, même si l'alimentation électrique du moteur linéaire est coupée. Par contre, ce blocage des rouleaux satellites n'a pas d'effet sur la commande du moteur électrique qui reste active et la tige linéaire filetée peut donc être sortie ou rentrée sous l'action de cette commande. Toutefois, les rouleaux satellites faisant alors fonction d'écrou dans le système vis/écrou formé par ces rouleaux satellites et la tige linéaire filetée, le rendement de conversion est alors réduit de plus de 50%.

On notera que la commande électrique du moteur linéaire peut être remplacée par une commande manuelle, le déplacement axial de l'arbre rotor de sa première à sa seconde position pouvant être également obtenu en poussant l'ergot 58 au moyen d'un outillage approprié après avoir enlevé le bouchon d'accès 60. La position « enfoncée » ou non de cet ergot permet en outre d'assurer un contrôle visuel simple de la position axiale de l'arbre moteur et donc par suite de la position réversible ou irréversible de l'actionneur.

Comme il a été explicité précédemment, lorsque le mécanisme de sélection est enclenché l'actionneur est dans une position irréversible. Toutefois, ce mécanisme de sélection intégrant un limiteur de couple, il est possible revenir à une position réversible de l'actionneur si la force axiale exercée sur la tige linéaire filetée excède un couple prédéfini par l'ensemble écrou/rondelles/garniture du mécanisme de sélection. En effet, dans ce cas, la garniture de friction ne peut plus empêcher la rotation de la pièce en cloche 70 dans la paroi en cloche 50A et donc il se créé une désolidarisation entre le porte rouleaux satellites 32 et l'écrou de vis 18. La tige linéaire filetée bouge sous l'action de cette force axiale extérieure alors que l'arbre rotor du moteur linéaire lui reste fixe.

Avec l'actionneur de l'invention, on obtient un dispositif relativement compact et donc facilement intégrable dans un dispositif embarqué comme un système de freinage aéronautique. En outre, la circulation des efforts axiaux étant rebouclés sur la pièce d'appui à l'avant de l'actionneur, les efforts ne transitent pas par le carter de protection ou les éléments moteurs sensibles qui ne sont donc pas sollicités.

## Revendications

1. Actionneur électrique comportant un moteur électrique (14) ayant un stator annulaire (16) et un rotor tubulaire (18) portant plusieurs segments d'aimant permanent (20) et constituant un écrou de vis d'un mécanisme à vis et rouleaux satellites destiné à transformer le mouvement de rotation dudit moteur électrique en un mouvement de translation axiale d'une tige linéaire filetée (30) disposée coaxialement audit rotor tubulaire et constituant ladite vis dudit mécanisme à vis et rouleaux satellites, lesdits rouleaux satellites (34) étant montés avec leurs axes parallèles sur un porte rouleaux satellites (32), **caractérisé en ce que** ledit porte rouleaux satellites comporte une dentelure destiné à coopérer avec une dentelure correspondante d'un mécanisme de sélection (40) actionné par un moteur électrique linéaire à deux positions (42) pour, en bloquant sélectivement le mouvement de rotation synchrone desdits rouleaux satellites par rapport audit rotor tubulaire, interdire tout mouvement de translation axiale de ladite tige linéaire filetée sous l'action d'une force extérieure de traction ou de compression.

2. Actionneur électrique selon la revendication 1, **caractérisé en ce que** ledit moteur électrique linéaire à deux positions comporte, logé dans un boîtier (44), un stator formé d'un premier et d'un second bobinages annulaires (46, 48) séparés axialement d'une distance déterminée et un rotor (50) formé par un arbre concentrique portant un premier et un second segments annulaires adjacents d'aimant permanent (52, 54) d'une largeur sensiblement égale à celle du bobinage annulaire auquel ils sont chacun associés, une première position dudit moteur électrique linéaire étant définie lorsque ledit premier segment d'aimant permanent (54) fait face audit premier bobinage annulaire (46) et une seconde position dudit moteur électrique linéaire étant définie lorsque ledit second segment d'aimant permanent (56) fait face audit second bobinage annulaire (48).

3. Actionneur électrique selon la revendication 2, **caractérisé en ce que** le guidage axial et radial dudit arbre rotor est réalisé par un palier en carbone (56) monté entre ledit arbre rotor et lesdits bobinages annulaires.

4. Actionneur électrique selon la revendication 2, **caractérisé en ce que** le passage de ladite première à ladite seconde position et inversement est effectué par une commande électrique dudit moteur électrique linéaire à deux positions.

5. Actionneur électrique selon la revendication 2, **caractérisé en ce que** le passage de ladite première à ladite seconde position et inversement est effectué par un déplacement axial manuel dudit arbre rotor au moyen d'un outillage approprié.

6. Actionneur électrique selon la revendication 4 ou la revendication 5, **caractérisé en ce que** la position dudit moteur électrique linéaire est détectée automatiquement par la mesure de l'inductance de l'un desdits premier et second bobinages annulaires.

7. Actionneur électrique selon l'une quelconque des revendications 1 à 6, **caractérisé en ce que** ledit moteur électrique linéaire à deux positions est monté dans le prolongement de ladite tige linéaire filetée, l'extrémité dudit arbre rotor faisant face à ladite tige linéaire filetée étant formée par une paroi en cloche (50A) comportant des cannelures externes (68) destinées à coopérer avec des cannelures correspondantes (18A) dudit rotor tubulaire et à l'intérieur de laquelle est monté ledit mécanisme de sélection.

8. Actionneur électrique selon la revendication 7, **caractérisé en ce que** l'extrémité dudit arbre rotor opposée à ladite tige linéaire filetée comporte un plot dont la position « enfoncée » ou non permet d'assurer un contrôle visuel simple de la position axiale dudit arbre rotor.

9. Actionneur électrique selon la revendication 7, **caractérisé en ce que** ledit mécanisme de sélection comporte une pièce en cloche (70) reposant sur une garniture de friction (72) déposée au fond de ladite paroi en cloche et maintenue en position contre des rondelles élastiques (74) par un écrou de réglage d'effort (76).

## Claims

1. An electrical actuator comprising an electric motor (14) having an annular stator (16) and a tubular rotor (18) carrying a plurality of permanent magnet segments (20) and constituting a screw nut of a mechanism comprising a screw and satellite rollers for transforming the rotary movement of said electric motor into movement in axial translation of a linear threaded rod (30) arranged coaxially with said tubular rotor and constituting said screw of said screw and satellite roller mechanism, said satellite rollers (34) being mounted with their axes parallel on a satellite roller carrier (32), the actuator being **characterized in that** said satellite roller carrier includes serrations for co-operating with corresponding serrations of a selector mechanism (40) actuated by a two-position linear electric motor (42) so that, by selectively blocking the synchronous rotary motion of said satellite rollers relative to said tubular roller, it is possible to prevent any movement in axial translation of said threaded linear rod under the action of an external force in traction or in compression.

2. An electric actuator according to claim 1, **characterized in that** said two-position linear electric motor comprises, housed in a housing (44), a stator formed by first and second annular windings (46, 48) spaced apart axially by a determined distance, and a rotor (50) formed by a coaxial shaft carrying first and second adjacent annular permanent-magnet segments (52, 54) of width substantially equal to the width of the annular winding with which each of them is associated, a first position of said linear electric motor being defined when said first permanent-magnet segment (54) faces said first annular winding (46), and a second position of said linear electric motor being defined when said second permanent-magnet segment (56) faces said second annular winding (48).

3. An electric actuator according to claim 2, **characterized in that** the axial and radial guidance of said rotor shaft is provided by a carbon bearing (56) mounted between said rotor shaft and said annular windings.

4. An electric actuator according to claim 2, **characterized in that** changing from said first position to said second position, and vice versa, is performed by electrically controlling said two-position linear electric motor.

5. An electric actuator according to claim 2, **characterized in that** changing from said first position to said second position, and vice versa, is performed by manually moving said rotor shaft axially by means of appropriate tooling.

6. An electric actuator according to claim 4 or claim 5, **characterized in that** the position of said linear electric motor is detected automatically by measuring the inductance of one of said first and second annular windings.

7. An electric actuator according to any one of claims 1 to 6, **characterized in that** said two-position linear electric motor is mounted in line with said threaded linear rod, the end of said rotor shaft that faces said threaded linear rod being formed by a bell-shaped wall (50A) including external fluting (68) for co-operating with corresponding fluting (18A) of said tubular rotor and within which said selector mechanism is mounted.

8. An electric actuator according to claim 7, **characterized in that** the end of said rotor shaft opposite from said threaded linear rod includes a stud having a non-permanent or "depressed" position that enables the axial position of said rotor shaft to be checked visually in simple manner.

9. An electric actuator according to claim 7, **characterized in that** said selector mechanism includes a bell-shaped part (70) resting on a friction lining (72) placed at the bottom of said bell-shaped wall and held in position against spring washers (74) by a force-setting nut (76).

## Patentansprüche

1. Elektrisches Stellglied, das einen Elektromotor (14) umfaßt, der einen ringförmigen Stator (16) und einen röhrenförmigen Rotor (18) aufweist, der mehrere Permanentmagnetabschnitte (20) trägt und eine Schraubenmutter eines Mechanismus mit Schraube und Satellitenzylindern bildet, der dazu bestimmt ist, die Drehbewegung des Elektromotors in eine axiale Translationsbewegung einer linearen Gewindestange (30) umzuwandeln, die koaxial an dem röhrenförmigen Rotor angeordnet ist und die die Schraube des Mechanismus mit Schraube und Satellitenzylindern bildet, wobei die Satellitenzylinder (34) mit ihren Achsen parallel auf einem Satellitenzylinderhalter (32) angebracht sind, **dadurch gekennzeichnet, daß** der Satellitenzylinderhalter eine Auszackung umfaßt, die dazu bestimmt ist, mit einer entsprechenden Auszackung eines Auswahlmechanismus (40) zusammenzuwirken, der durch einen elektrischen Linearmotor mit zwei Stellungen (42) betätigt wird, um durch selektives Blockieren der synchronen Drehbewegung der Satellitenzylinder in Bezug zum röhrenförmigen Rotor jede axiale Translationsbewegung der linearen Gewindestange unter der Einwirkung einer äußeren Zug- oder Druckkraft zu sperren.

2. Elektrisches Stellglied nach Anspruch 1, **dadurch gekennzeichnet, daß** der elektrische Linearmotor mit zwei Stellungen in einem Gehäuse (44) eingebaut einen Stator, der aus einer ersten und einer zweiten ringförmigen Wicklung (46, 48) gebildet ist, die axial durch einen bestimmten Abstand getrennt sind, und einen Rotor (50) umfaßt, der durch eine konzentrische Welle gebildet ist, die einen ersten und einen zweiten benachbarten ringförmigen Permanentmagnetabschnitt (52, 54) mit einer Breite trägt, die im Wesentlichen gleich derjenigen der ringförmigen Wicklung ist, der sie jeweils zugehörig sind, wobei eine erste Stellung des elektrischen Linearmotors definiert ist, wenn der erste Permanentmagnetabschnitt (54) der ersten ringförmigen Wicklung (46) gegenüberliegt, und eine zweite Stellung des elektrischen Linearmotors definiert ist, wenn der zweite Permanentmagnetabschnitt (56) der zweiten ringförmigen Wicklung (48) gegenüberliegt.

3. Elektrisches Stellglied nach Anspruch 2, **dadurch gekennzeichnet, daß** die axiale und radiale Führung der Rotorwelle durch ein Lager (56) aus Kohlenstoff ausgeführt ist, das zwischen der Rotorwelle und den ringförmigen Wicklungen angebracht ist.

4. Elektrisches Stellglied nach Anspruch 2, **dadurch gekennzeichnet, daß** der Übergang von der ersten in die zweite Stellung und umgekehrt durch einen elektrischen Antrieb des elektrischen Linearmotors mit zwei Stellungen durchgeführt wird.

5. Elektrisches Stellglied nach Anspruch 2, **dadurch gekennzeichnet, daß** der Übergang von der ersten in die zweite Stellung und umgekehrt durch eine manuelle axiale Verschiebung der Rotorwelle mittels einer zweckmäßigen Ausrüstung durchgeführt wird.

6. Elektrisches Stellglied nach Anspruch 4 oder Anspruch 5, **dadurch gekennzeichnet, daß** die Stellung des elektrischen Linearmotors automatisch durch die Messung der Induktivität von einer der ersten und zweiten ringförmigen Wicklung ermittelt wird.

7. Elektrisches Stellglied nach einem der Ansprüche 1 bis 6, **dadurch gekennzeichnet, daß** der elektrische Linearmotor mit zwei Stellungen in der Verlängerung der linearen Gewindestange angebracht ist, wobei das Ende der Rotorwelle, das der linearen Gewindestange gegenüberliegt, durch eine glockenförmige Wand (50A) gebildet ist, die Außenrillen (68) umfaßt, die dazu bestimmt sind, mit entsprechenden Rillen (18A) des röhrenförmigen Rotors zusammenzuwirken, und in der der Auswahlmechanismus angebracht ist.

8. Elektrisches Stellglied nach Anspruch 7, **dadurch gekennzeichnet, daß** das Ende der Rotorwelle, das der linearen Gewindestange entgegengesetzt ist, einen Kontakt umfaßt, dessen "eingedrückte" oder nicht "eingedrückte" Stellung die Gewährleistung einer einfachen Sichtkontrolle der axialen Stellung der Rotorwelle ermöglicht.

9. Elektrisches Stellglied nach Anspruch 7, **dadurch gekennzeichnet, daß** der Auswahlmechanismus ein glockenförmiges Teil (70) umfaßt, das auf einem Reibbelag (72) ruht, der auf dem Boden der glockenförmigen Wand aufgebracht ist und durch eine Spannungseinstellmutter (76) gegen elastische runde Scheiben (74) in seiner Stellung gehalten wird.
